# EUROPEAN PATENT SPECIFICATION

(11) **EP 3 456 408 B1**
(45) Date of publication and mention of the grant of the patent: **22.07.2020**
(21) Application number: 17382605.8
(22) Date of filing: 13.09.2017
(51) Int. Cl.: B01F 7/00, B01F 7/18, B01F 15/00, C02F 3/28, C02F 3/30, C02F 1/00

(54) **PLANT FOR PURFIYING SLURRY**
ANLAGE ZUM AUFREINIGEN VON SCHLAMM
INSTALLATION DE PURIFICATION DE BOUES

(43) Date of publication of application: 20.03.2019
(73) Proprietor: Depuracion Biologica Y Bacteriologica de Aguas Residuales, S.L., 08532 Taradell (Barcelona) (ES)
(72) Inventor: MONS SANZ, Joaquin, 08532 Taradell (Barcelona) (ES)
(74) Representative: Pons

(56) References cited:
- EP-A1- 0 000 293
- WO-A1-88/08410
- ES-A1- 2 246 741

## Description

### OBJECT OF THE INVENTION

The present invention can be included in the technological sector of livestock. Likewise, it can also be included in that of purification of livestock waste, such as slurry. In a more specific manner, the object of the invention is a plant for purifying slurry.

### BACKGROUND OF THE INVENTION

Document ES2371612 describes an installation for purifying slurry that comprises: a homogenizing tank for receiving slurry; stirring means for homogenizing the slurry in the tank; a dispenser for bringing a chemical activator to the tank with the slurry, so as to homogenize the liquid and solid phases of the slurry and to encourage bacterial growth; a first biological reactor, equipped with air injectors in the bottom, so that, by means of consuming oxygen in the injected air, the bacteria homogenize the slurry, by consuming the organic portion of the slurry and thus micronizing it until it is liquefied; a nitrate removal tank, to which the slurry is transferred after micronization, so that the bacteria, in the absence of oxygen, consume nitrogen; a second biological reactor with air intake in order to continue the micronization; and a decanter, where water for irrigation and mud that is recirculated to the homogenizing tank are separated. A similar process is described in ES 2 246 741 A1.

### DESCRIPTION OF THE INVENTION

The present invention, which is based on a conventional plant that incorporates a homogenization tank, an aerobic purification phase in a biological reactor, an anaerobic purification phase in a nitrate remover, a decanter, and recirculation means, for recirculating sludge to the homogenization tank from the decanter, has a series of improvements for increasing performance and/or reducing costs.

In particular, according to the present invention, the recirculation means also enable the sludge from the biological reactor to be recirculated towards the homogenization tank.

Likewise, the nitrate remover preferably comprises stirring means that enable the sludge to be lifted without creating oxygen bubbles. In particular, the stirring means comprise a rotating vertical shaft submerged in the nitrate remover, and a pair of blades that project from the sides of the shaft.

Moreover, before the conduction of slurry to the homogenization tank, it can stay in a stratified basin.

### DESCRIPTION OF THE DRAWINGS

As a complement to the description being made, and for the purpose of helping to make the characteristics of the invention more readily understandable, in accordance with a preferred example of practical embodiment thereof, said description is accompanied by a set of drawings constituting an integral part thereof which, by way of illustration and not limitation, represent the following:
Figure 1.- Shows a schematic view of the plant, where it also schematically represents: an obligatory basin for slurry in a livestock installation; a separator for drying the slurry; and a manure pile, as a source of slurry for the plant.
Figure 2.- Shows an expanded detailed view of a stratified basin shown in figure 1.
Figure 3.- Shows an expanded detailed view of the stirring means of the nitrate remover.

### PREFERRED EMBODIMENT OF THE INVENTION

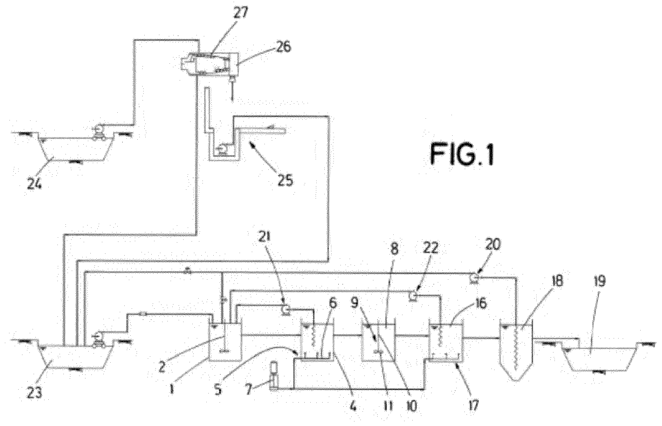

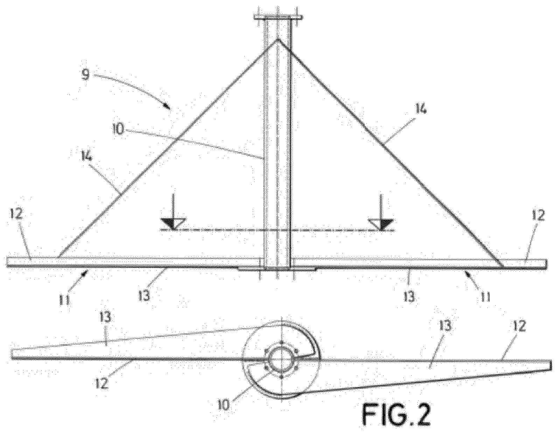

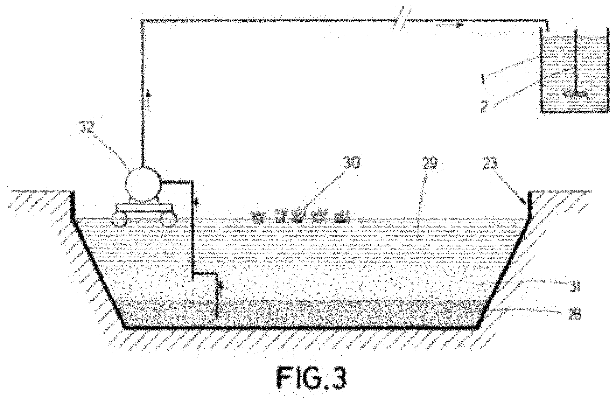

Subsequently, a detailed description is provided, through the aforementioned attached figures 1-3, of an exemplary embodiment of a plant for purifying slurry object of the present invention.

The plant comprises a homogenization tank (1), which contains slurry with bacteria. A homogenizer (2) is mounted in the homogenization tank (1) for homogenizing the slurry, which comprises a liquid phase and a solid phase. A dispenser (not shown) serves to dispense an activating compound into the homogenizing tank (1), which helps to homogenize the slurry, while acting as nutrients for the development of the bacteria.

The plant additionally incorporates a first biological reactor (4), within which, preferably at the bottom, first aeration means (5) are mounted, which comprise for example injectors (6) fed by an air compressor (7) for supplying oxygen to the inside of the first biological reactor (4). In the first biological reactor (4), the slurry coming from the homogenization tank (1) is received, as well as the bacteria use the oxygen, supplied by the first aeration means (5), for consuming organic matter from the slurry by micronizing and liquefying said organic matter. As a result, most of the organic contents of the slurry are purified in the first biological tank (4), by means of the aerobic action of the bacteria.

From the first biological reactor (4), the slurry accesses a nitrate remover (8), in which the bacteria consume nitrogen in the absence of oxygen. As a consequence thereof, in the nitrate remover (8), nitrogen present in the slurry is eliminated by means of an anaerobic action of the bacteria.

With the aim of putting the slurry into closer contact with the bacteria, which tend to decant with the sludge, there are stirring means (9) inside the nitrate remover (8) that preferably lift the slurry without creating oxygen bubbles. To do so, the stirring means (9) preferably comprise a rotating vertical shaft (10), for example, made of stainless steel, which is submerged in the nitrate remover (8). Preferably close to a lower end of the shaft (10), there are two blades (11) that extend out on both sides of the shaft (10), preferably at a same height.

Preferably, the blades (11) comprise an upper member (12) and a lower member (13) joined by forming an angle, according to a profile for example, such in an L-shape, preferably at a right angle.

The lower member (13) is preferably horizontal, although it can also be tilted downwards. In turn, the upper member (12) is preferably vertical. A rotation of the shaft (10) in turn pulls the blades (11) into rotation, which lift the sludge by colliding with it. Preferably, the stirring means (9) additionally comprise a pair of braces (14) connected to the blades (11), preferably at the free ends of the blades (11), in order to suspend the blades (11) on the shaft (10), in a fastening position located above the blades (11).

Moreover, the lower members (13) of the blades (11) are preferably at a distance from the bottom of the nitrate remover (8) which is greater than 15 cm, in order to prevent the blades (11) from lifting a portion of the sludge located further down that is referred to as "starter". Thus, an amount of bacteria is preserved inside the nitrate remover (8).

Moreover, the stirring means (9) additionally preferably comprise a timer (not shown) for stirring the sludge in a preset manner. The sludge decants after a certain decantation period, for example, to the order of 20-25 minutes. Therefore, it is preferred that the timer sets the stirring of the sludge in a discontinuous manner. For example, for the previously indicated decantation period of 20-25 minutes, the sludge is stirred for a brief stirring period, for example, of 2-3 minutes, after rest periods, for example, of 10-15 minutes. The interrupted actuation of the stirring means implies important savings in electric energy, depending on the relationship between the rest period and the stirring period.

After the nitrate remover (8), the slurry can be optionally conducted to a second biological reactor (16), having corresponding second aeration means (17), where remaining organic matter is purified by means of aerobic action of the bacteria, complementing the effect that took place in the first biological reactor (4).

The slurry is conducted to a decanter (18), whether it be from the first biological reactor (4) or, depending on the case, from the second biological reactor (16). In the decanter (18), the slurry is separated into sludge that settles to the bottom, and purified water that can be conducted to various uses, for example, irrigation water, prior to an optional stay in a basin (19) for later use.

It is worth noting that the plant additionally comprises recirculation means for recirculating sludge to the homogenization tank (1). The recirculation means comprise a first pumping device (20) for pumping sludge from the decanter (18) to the homogenization tank (1).

Additionally, the recirculation means comprise a second pumping device (21) and, if applicable, a third pumping device (22), for pumping sludge to the homogenization tank (1) from the first biological reactor (4) and from the second biological reactor (16), respectively. Recirculating the sludge not only from the decanter (18), but also from the first biological reactor (4) and, if applicable, the second biological reactor (16), causes an increase in the number of bacteria that greatly helps the continuous operation of the plant. By way of illustrative example, if a conventional plant can contain a bacterial concentration in the homogenization tank of around 380*10⁶ per cubic centimeter, the recirculation proposed in the present invention achieves concentrations to the order of 1600*10⁶ bacteria per cubic centimeter, in other words between four and five times higher.

Moreover, the plant incorporates a stratified basin (23) for retaining the slurry before being transferred to the homogenization tank (1). The slurry can access the stratified basin (23), or the homogenization tank (1) directly, from several points of origin, such as from obligatory basins (24) located in the livestock installations themselves, or also from manure piles (25). In the case of the livestock installations, the slurry can be transported to the plant after having been dried in a separator (26), preferably equipped with a chute (27), where the liquid portion of the slurry is transferred to the plant and dry waste is used for other purposes.

The stratified basin (23) is stratified into three layers: a first layer (28), which is deeper down, is made up of sludge. A second layer (29), in the upper portion, comprises clean water. On the second layer (29), plant species (30) grow, such as algae, that bring oxygen to the second layer (29), removing bad odors coming from the sludge of the first layer (28). Finally, a third layer (31), which is inserted between the first layer (28) and the second layer (29), has a murky intermediate composition. The homogenization tank (1) is fed from the first layer (28) and the third layer (29), by using pumping means (32), which preferably float on the surface of the second layer (29).

## Claims

1. A plant for purifying slurry, comprising:
- a homogenization tank (1), which contains slurry with bacteria, and wherein a homogenizer (2) is mounted for homogenizing the slurry;
- a first biological reactor (4), connected to the homogenization tank (1) for receiving slurry, and inside of which first aeration means (5) are mounted for supplying oxygen, in order to enable the bacteria to aerobically decompose the slurry;
- a nitrate remover (8), for receiving slurry from the first biological reactor (4), for removing nitrogen from the slurry by means of an anaerobic action of the bacteria;
- stirring means (9), mounted within the nitrate remover (8), for putting the slurry in contact with the bacteria;
- a decanter (18), which receives the denitrified slurry, for decanting the slurry by separating said slurry into purified water and sludge; and
- recirculation means, for recirculating sludge to the homogenization tank (1), and that comprise a first pumping device (20) for pumping sludge from the decanter (18) to the homogenization tank (1) and a second pumping device (21) for pumping sludge from the first biological reactor (4) to the homogenization tank (1); the plant being **characterized in that** it additionally comprises a stratified basin (23) for feeding slurry to the homogenization tank (1), and that comprises the following three layers:
• a first layer (28), which is deeper down, made up of sludge;
• a second layer (29), in the upper portion, comprising clean water and plant species (30), such as algae; and
• a third layer (31), inserted between the first layer (28) and the second layer (29), with a murky intermediate composition;
wherein the plant additionally comprises pumping means (32) for pumping the contents of the first layer (28) and the third layer (29) to the homogenization tank (1).

2. The plant for purifying slurry, according to claim 1, **characterized in that** it additionally comprises a second biological reactor (16), which receives slurry from the nitrate remover (18), and that incorporates second aeration means (17), in order to continue purifying the slurry by means of aerobic action of the bacteria.

3. The plant for purifying slurry, according to claim 2, **characterized in that** the recirculation means additionally comprise a third pumping device (22), for pumping sludge from the second biological reactor (16).

4. The plant for purifying slurry, according to any of claims 1 to 3, **characterized in that** the stirring means (9) comprise:
- a rotating vertical shaft (10), which is submerged in the nitrate remover (18); and
- two blades (11) that extend on both sides of the shaft (10),
wherein the rotating vertical shaft (10) is joint to the two blades (11) and is intended to rotate around a vertical axis for lifting the slurry by colliding with it without creating oxygen bubbles.

5. The plant for purifying slurry according to claim 4, **characterized in that** the blades (11) have an angular profile, the blades (11) comprising:
- a lower member (13), and
- an upper member (12) that forms an angle with the lower member (13).

6. The plant for purifying slurry according to claim 5, **characterized in that** the lower member (13) is horizontal.

7. The plant for purifying slurry according to claim 5, **characterized in that** the lower member (13) forms an angle that is oriented downwards.

8. The plant for purifying slurry according any of claims 5 to 7, **characterized in that** the upper member (12) and the lower member (13) form an L-shaped profile.

9. The plant for purifying slurry according to claim 8, **characterized in that** the upper member (12) and the lower member (13) form a right angle.

10. The plant for purifying slurry according to any of claims 4 to 9, **characterized in that** the stirring means (9) additionally comprise a pair of braces (14) connected to the blades (11) in order to suspend the blades (11) on the shaft (10), in a fastening position located above the blades (11).

11. The plant for purifying slurry, according to any of claims 1 to 10, **characterized in that** the stirring means (9) additionally comprise a timer for stirring the sludge in a preset manner.

12. The plant for purifying slurry, according to claim 11, **characterized in that** the timer is configured to alternately determine stirring periods and rest periods.

13. The plant for purifying slurry, according to any of claims 5 to 12, **characterized in that** the lower members (13) of the blades (11) are at a distance from the bottom of the nitrate remover (18) which is greater than 15 cm.

14. The plant for purifying slurry according to claim 1, **characterized in that** the pumping means (32) are floating on the second layer (29).

## Patentansprüche

1. Anlage zum Aufreinigen einer Aufschlämmung, umfassend:
- einen Homogenisierungstank (1), der eine Aufschlämmung mit Bakterien enthält, und wobei ein Homogenisator (2) zum Homogenisieren der Aufschlämmung angebracht ist;
- einen ersten biologischen Reaktor (4), der mit dem Homogenisierungstank (1) zur Aufnahme einer Aufschlämmung verbunden ist und in dem erste Belüftungsmittel (5) zur Zufuhr von Sauerstoff angebracht sind, damit die Bakterien die Aufschlämmung aerob zersetzen können;
- einen Nitratentferner (8) zur Aufnahme einer Aufschlämmung aus dem ersten biologischen Reaktor (4) zur Entfernung von Stickstoff aus der Aufschlämmung mittels einer anaeroben Wirkung der Bakterien;
- Rührmittel (9), die in den Nitratentferner (8) angebracht sind, um die Aufschlämmung mit den Bakterien in Kontakt zu bringen;
- einen Dekanter (18), der die denitrifizierte Aufschlämmung aufnimmt, um die Aufschlämmung durch Trennen der Aufschlämmung in gereinigtes Wasser und Schlamm zu dekantieren; und
- Umwälzmittel zum Umwälzen von Schlamm in den Homogenisierungstank (1), und umfassend eine erste Pumpvorrichtung (20) zum Pumpen von Schlamm aus dem Dekanter (18) zum Homogenisierungstank (1) und eine zweite Pumpvorrichtung (21) zum Pumpen von Schlamm aus dem ersten biologischen Reaktor (4) in den Homogenisierungstank (1);
wobei die Anlage **dadurch gekennzeichnet ist, dass** sie zusätzlich ein geschichtetes Becken (23) zum Zuführen einer Aufschlämmung zum Homogenisierungstank (1) umfasst, und umfassend die folgenden drei Schichten:
• eine erste Schicht (28), die tiefer liegt und aus Schlamm besteht;
• eine zweite Schicht (29) im oberen Abschnitt, die sauberes Wasser und Pflanzenarten (30) wie Algen umfasst; und
• eine dritte Schicht (31), die zwischen der ersten Schicht (28) und der zweiten Schicht (29) mit einer trüben Zwischenzusammensetzung eingefügt ist; wobei die Anlage zusätzlich Pumpmittel (32) zum Pumpen des Inhalts der ersten Schicht (28) und der dritten Schicht (29) zum Homogenisierungstank (1) umfasst.

2. Anlage zum Aufreinigen einer Aufschlämmung nach Anspruch 1, **dadurch gekennzeichnet, dass** sie zusätzlich einen zweiten biologischen Reaktor (16) umfasst, der eine Aufschlämmung aus dem Nitratentferner (18) aufnimmt und der zweite Belüftungseinrichtung (17) enthält, um die Aufschlämmung durch aerobe Wirkung der Bakterien weiter aufzureinigen.

3. Anlage zum Aufreinigen einer Aufschlämmung nach Anspruch 2, **dadurch gekennzeichnet, dass** die Umwälzmittel zusätzlich eine dritte Pumpvorrichtung (22) zum Pumpen von Schlamm aus dem zweiten biologischen Reaktor (16) umfassen.

4. Anlage zum Aufreinigen einer Aufschlämmung nach einem der Ansprüche 1 bis 3, **dadurch gekennzeichnet, dass** die Rührmittel (9) umfassen:
- eine rotierende vertikale Welle (10), die in den Nitratentferner (18) eingetaucht ist; und
- zwei Schaufeln (11), die sich auf beiden Seiten der Welle (10) erstrecken, wobei die rotierende vertikale Welle (10) mit den beiden Schaufeln (11) verknüpft ist und sich um eine vertikale Achse drehen soll, um die Aufschlämmung durch Kollision damit ohne Erzeugung von Sauerstoffblasen anzuheben.

5. Anlage zum Aufreinigen einer Aufschlämmung nach Anspruch 4, **dadurch gekennzeichnet, dass** die Schaufeln (11) ein Winkelprofil aufweisen, wobei die Schaufeln (11) umfassen:
- ein unteres Element (13) und
- ein oberes Element (12), das mit dem unteren Element (13) einen Winkel bildet.

6. Anlage zum Aufreinigen einer Aufschlämmung nach Anspruch 5, **dadurch gekennzeichnet, dass** das untere Element (13) horizontal ist.

7. Anlage zum Aufreinigen einer Aufschlämmung nach Anspruch 5, **dadurch gekennzeichnet, dass** das untere Element (13) einen Winkel bildet, der nach unten ausgerichtet ist.

8. Anlage zum Aufreinigen einer Aufschlämmung nach einem der Ansprüche 5 bis 7, **dadurch gekennzeichnet, dass** das obere Element (12) und das untere Element (13) ein L-förmiges Profil bilden.

9. Anlage zum Aufreinigen einer Aufschlämmung nach Anspruch 8, **dadurch gekennzeichnet, dass** das obere Element (12) und das untere Element (13) einen rechten Winkel bilden.

10. Anlage zum Aufreinigen einer Aufschlämmung nach einem der Ansprüche 4 bis 9, **dadurch gekennzeichnet, dass** die Rührmittel (9) zusätzlich ein Paar von Streben (14) umfassen, die mit den Schaufeln (11) verbunden sind, um die Schaufeln (11) an der Welle (10) in einer Befestigungsposition aufzuhängen, die über den Schaufeln (11) angeordnet ist.

11. Anlage zum Aufreinigen einer Aufschlämmung nach einem der Ansprüche 1 bis 10, **dadurch gekennzeichnet, dass** die Rührmittel (9) zusätzlich einen Zeitgeber zum voreingestellten Rühren des Schlamms umfassen.

12. Anlage zum Aufreinigen einer Aufschlämmung nach Anspruch 11, **dadurch gekennzeichnet, dass** der Zeitgeber so konfiguriert ist, dass er abwechselnd Rühr- und Ruhezeiten bestimmt.

13. Anlage zum Aufreinigen einer Aufschlämmung nach einem der Ansprüche 5 bis 12, **dadurch gekennzeichnet, dass** sich die unteren Elemente (13) der Schaufeln (11) in einem Abstand vom Boden des Nitratentferners (18) befinden, der größer als 15 cm ist.

14. Anlage zum Aufreinigen von Schlamm nach Anspruch 1, **dadurch gekennzeichnet, dass** die Pumpmittel (32) auf der zweiten Schicht (29) schwimmen.

## Revendications

1. Station d'épuration de lisier, comprenant :
- un réservoir d'homogénéisation (1), qui contient du lisier avec des bactéries, et dans lequel un homogénéisateur (2) est monté pour homogénéiser le lisier ;
- un premier réacteur biologique (4), raccordé au réservoir d'homogénéisation (1) pour recevoir le lisier, et à l'intérieur duquel sont montés des premiers moyens d'aération (5) pour fournir de l'oxygène, afin de permettre aux bactéries de décomposer de manière aérobie le lisier ;
- un éliminateur de nitrate (8), pour recevoir le lisier du premier réacteur biologique (4), pour éliminer l'azote du lisier au moyen d'une action anaérobie des bactéries ;
- des moyens de brassage (9), montés dans l'éliminateur de nitrate (8), pour mettre le lisier en contact avec les bactéries ;
- un décanteur (18), qui reçoit le lisier dénitrifié, pour décanter le lisier en séparant ledit lisier en eau épurée et en boue ; et
- des moyens de recirculation, pour faire recirculer la boue vers le réservoir d'homogénéisation (1), et qui comprennent un premier dispositif de pompage (20) pour pomper la boue du décanteur (18) vers le réservoir d'homogénéisation (1) et un deuxième dispositif de pompage (21) pour pomper la boue du premier réacteur biologique (4) vers le réservoir d'homogénéisation (1) ;
la centrale étant **caractérisée en ce qu'**elle comprend en outre un bassin stratifié (23) pour alimenter en lisier le réservoir d'homogénéisation (1), et qui comprend les trois couches suivantes :
• une première couche (28), qui est plus profonde, composée de boue ;
• une deuxième couche (29), dans la partie supérieure, comprenant de l'eau propre et des espèces végétales (30), comme les algues ;
et
• une troisième couche (31), insérée entre la première couche (28) et la deuxième couche (29), avec une composition intermédiaire trouble ; dans laquelle la station comprend en outre des moyens de pompage (32) pour pomper les contenus de la première couche (28) et de la troisième couche (29) vers le réservoir d'homogénéisation (1).

2. Station d'épuration de lisier, selon la revendication 1, **caractérisée en ce qu'**elle comprend en outre un deuxième réacteur biologique (16), qui reçoit le lisier de l'éliminateur de nitrate (18), et qui incorpore des deuxièmes moyens d'aération (17), afin de continuer à épurer le lisier au moyen de l'action aérobie des bactéries.

3. Station d'épuration de lisier, selon la revendication 2, **caractérisée en ce que** les moyens de recirculation comprennent en outre un troisième dispositif de pompage (22), pour pomper la boue du deuxième réacteur biologique (16).

4. Station d'épuration de lisier, selon l'une quelconque des revendications 1 à 3, **caractérisée en ce que** les moyens de brassage (9) comprennent :
- un arbre vertical tournant (10), qui est immergé dans l'éliminateur de nitrate (18) ; et
- deux pales (11) qui s'étendent des deux côtés de l'arbre (10),
dans laquelle l'arbre vertical rotatif (10) est joint aux deux pales (11) et est destiné à tourner autour d'un axe vertical pour soulever le lisier en entrant en collision avec lui sans créer de bulles d'oxygène.

5. Station d'épuration de lisier selon la revendication 4, **caractérisée en ce que** les pales (11) ont un profil angulaire, les pales (11) comprenant :
- un élément inférieur (13), et
- un élément supérieur (12) qui forme un angle avec l'élément inférieur (13).

6. Station d'épuration de lisier selon la revendication 5, **caractérisée en ce que** l'élément inférieur (13) est horizontal.

7. Station d'épuration de lisier selon la revendication 5, **caractérisée en ce que** l'élément inférieur (13) forme un angle qui est orienté vers le bas.

8. Station d'épuration de lisier selon l'une quelconque des revendications 5 à 7, **caractérisée en ce que** l'élément supérieur (12) et l'élément inférieur (13) forment un profil en forme de L.

9. Station d'épuration de lisier selon la revendication 8, **caractérisée en ce que** l'élément supérieur (12) et l'élément inférieur (13) forment un angle droit.

10. Station d'épuration de lisier selon l'une quelconque des revendications 4 à 9, **caractérisée en ce que** les moyens de brassage (9) comprennent en outre une paire d'entretoises (14) raccordées aux pales (11) afin de suspendre les pales (11) à l'arbre (10), dans une position de fixation située au-dessus des pales (11).

11. Station d'épuration de lisier, selon l'une quelconque des revendications 1 à 10, **caractérisée en ce que** les moyens de brassage (9) comprennent en outre une minuterie pour brasser la boue d'une manière prédéfinie.

12. Station d'épuration de lisier, selon la revendication 11, **caractérisée en ce que** la minuterie est configurée pour déterminer alternativement des périodes de brassage et des périodes de repos.

13. Station d'épuration de lisier, selon l'une quelconque des revendications 5 à 12, **caractérisée en ce que** les éléments inférieurs (13) des pales (11) sont à une distance de la partie inférieure de l'éliminateur de nitrate (18) qui est supérieure à 15 cm.

14. Station d'épuration de lisier selon la revendication 1, **caractérisée en ce que** les moyens de pompage (32) flottent sur la deuxième couche (29).
